# EUROPÄISCHE PATENTSCHRIFT

(11) **EP 1 054 220 B1**
(45) Veröffentlichungstag und Bekanntmachung des Hinweises auf die Patenterteilung: **21.01.2004**
(21) Anmeldenummer: 99810439.2
(22) Anmeldetag: 19.05.1999
(51) Int. Cl.: F24F 13/02, B64F 1/305

(54) **Schlauchhaspel für Fluggastbrücken**
Hose reel for aircraft passenger boarding bridge
Dévidoir de tuyau pour passerelle d'embarquement d'un avion

(43) Veröffentlichungstag der Anmeldung: 22.11.2000
(73) Patentinhaber: IST-Edelstahl-Anlagenbau AG, 3645 Gwatt, Thun (CH)
(72) Erfinder: Zimmermann, Kurt, 3600 Thun (CH)
(74) Vertreter: BOVARD AG - Patentanwälte

(56) Entgegenhaltungen:
- US-A- 4 357 860
- US-A- 4 526 090
- US-A- 4 715 077
- US-A- 5 495 995

## Beschreibung

Die Erfindung betrifft eine Schlauchhaspel für Fluggastbrücken, mit einem Schlauch zum Zuführen von Luft zum Flugzeug und mit einem um eine horizontale Achse drehbaren Haspelkörper, der durch einen elektrischen Getriebemotor antreibbar ist und auf dem der Schlauch bei Nichtgebrauch in flachgedrücktem Zustand in übereinander liegenden Lagen aufgewickelt ist

Passagierflugzeuge müssen einige Zeit bevor die Passagiere einsteigen klimatisiert werden. Einerseits geschieht dies über die im Flugzeug eingebaute APU (alternate power unit). Die APU sind in der Regel Brennkraftmaschinen, deren Betrieb auf den Flughäfen wegen schlechtem Wirkungsgrad, Lärm und Umweltbelastung unerwünscht ist. Andererseits sind in modemen Flughafenbauten zentrale Flugzeugenergieversorgungsanlagen eingebaut, die unter anderem klimatisierte, das heisst hinsichtlich Temperatur und Feuchtigkeit aufbereitete Luft zur Verfügung stellen. Diese Luft wird mittels Teleskoprohren entlang von Fluggastbrücken, sogenannten Fingerdocks, geführt (Siehe zum Beispiel die US-A-4 357 860). Die Strecke vom Ende der Fluggastbrücke bis zur Stelle am Flugzeug, an der eine entsprechende Kupplung vorgesehen ist, wird mit einem beispielsweise bis zu 20 Meter langen Schlauch überbrückt, der einen Nenndurchmesser von beispielsweise 14" (356 mm), je nach benötigtem Luftvolumen, hat.

Die Handhabung dieser Schläuche durch das sogenannte Ramp-Personal bot bisher insbesondere folgende Probleme. Bei einigen Fluggastbrücken wurde der Schlauch nach dem Gebrauch frei aufgerollt und danach in einem Behälter abgelegt oder an der Fluggastbrücke aufgehängt. Da das Gewicht eines solchen Schlauches von etwa 20 Metern Länge um die 40 Kilogramm beträgt, ist diese Arbeit sehr mühsam. In einigen Ländern existieren Vorschriften, welche die durch Personen zu hebenden Lasten auf 25 Kilogramm beschränken. Es wurde auch schon eine Vorrichtung bekannt, die unter der Fluggastbrücke aufgehängt ist und bei welcher der Schlauch auf einer Haspel mit einer horizontalen Achse aufgewickelt wird. Der Platz unter der Fluggastbrücke ist in der Regel knapp, weil dort schon etliche andere Komponenten untergebracht sind. Bei dieser bekannten Vorrichtung wird der Schlauch mit Hilfe eines elektrischen Getriebemotors auf- und abgewickelt Eine Schlauchhaspel mit elektrischem Getriebemotor ist per se aus der US-A-5 495 995 bekannt. Da die bekannte Vorrichtung eine relativ grosse Bauhöhe beansprucht, kann die Fluggastbrücke, welche die Vorrichtung an ihrer Unterseite trägt, nicht genügend weit abgesenkt werden, um auch kleinere Flugzeuge bedienen zu können. Schliesslich ist bei dieser bekannten Vorrichtung die Haspel von einer Verschalung umgeben, was im Winter zu Vereisungen führen kann, wodurch sich der Schlauch beim motorischen Abwickeln verkeilen kann, was zu Betriebsstörungen und Beschädigungen der Vorrichtung führen kann.

Ausgehend von diesem Stand der Technik liegt der Erfindung die Aufgabe zugrunde, eine Schlauchhaspel für Fluggastbrücken vorzuschlagen, die einfach aufgebaut und dadurch kostengünstig herzustellen ist, die durch eine einzige Person einfach und sicher zu bedienen ist, die kompakt gebaut ist und wenig Platz benötigt und die der zu transportierenden Luft einen geringen Druckverlust entgegensetzt.

Diese Aufgabe wird gemäss der Erfindung gelöst durch eine axial am Haspelkörper angeordnete Drehdichtung zum Zuführen der Luft zum Schlauch, eine elektrisch betätigbare Magnetkupplung, die das Drehmoment des Getriebemotors auf den Haspelkörper überträgt und die in stromlosem Zustand gelöst ist, so dass der Haspelkörper frei drehbar ist und durch ein einziges Bedienungselement, mit dem die Magnetkupplung einkuppelbar und gleichzeitig der Getriebemotor in einer Drehrichtung einschaltbar ist, in welcher der Schlauch aufgewickelt wird.

Durch die axial am Haspelkörper angeordnete Drehdichtung wird die Luft mit einem geringen Druckverlust zum Schlauch geführt. Die elektrisch betätigbare Magnetkupplung, die in stromlosem Zustand gelöst ist, gewährleistet, dass der Schlauch mit geringem Widerstand vom Haspelkörper abgezogen werden kann. Das einzige Bedienungselement sichert eine einfache Bedienbarkeit der Schlauchhaspel, bei der Bedienungsfehler praktisch ausgeschlossen sind.

Besondere Ausführungsarten der erfindungsgemässen Schlauchhaspel sind in den abhängigen Ansprüchen umschrieben.

Ein Ausführungsbeispiel der Erfindung ist nachfolgend unter Bezugnahme auf die beiliegenden Zeichnungen beschrieben. Es zeigt
- Figur 1: einen Grundriss einer Schlauchhaspel ohne Schlauch,
- Figur 2: einen Seitenriss der Schlauchhaspel nach Figur 1 in Richtung des Pfeiles II in Figur 1 gesehen, und
- Figur 3: einen Seitenriss der Schlauchhaspel nach Figur 1 in Richtung des Pfeiles III in Figur 1 gesehen.

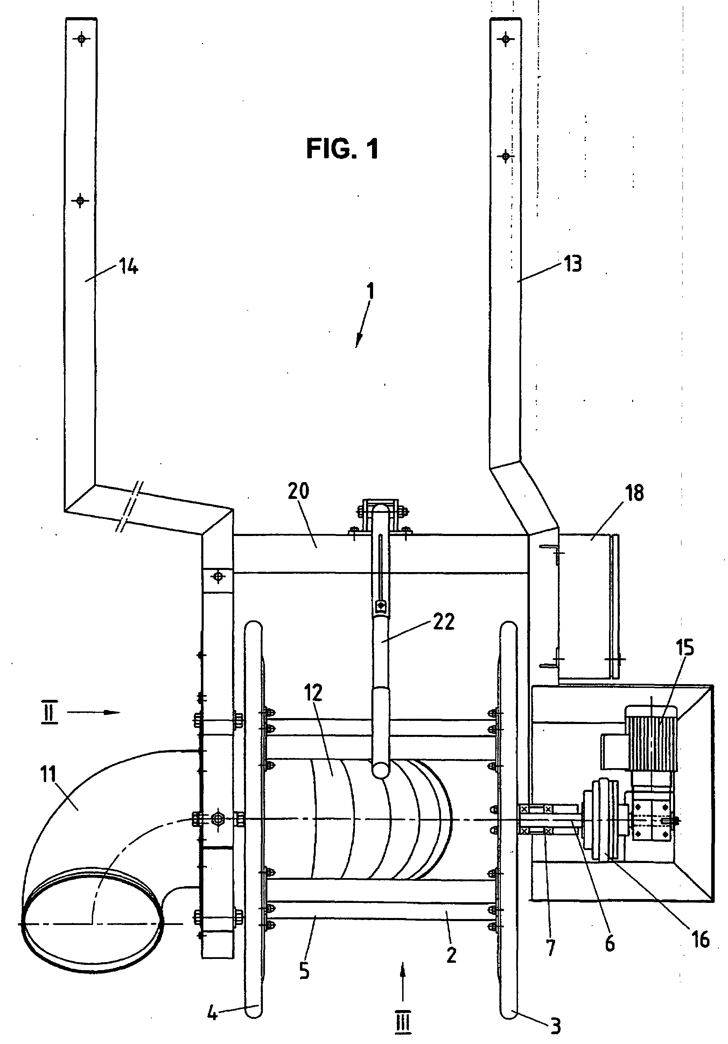

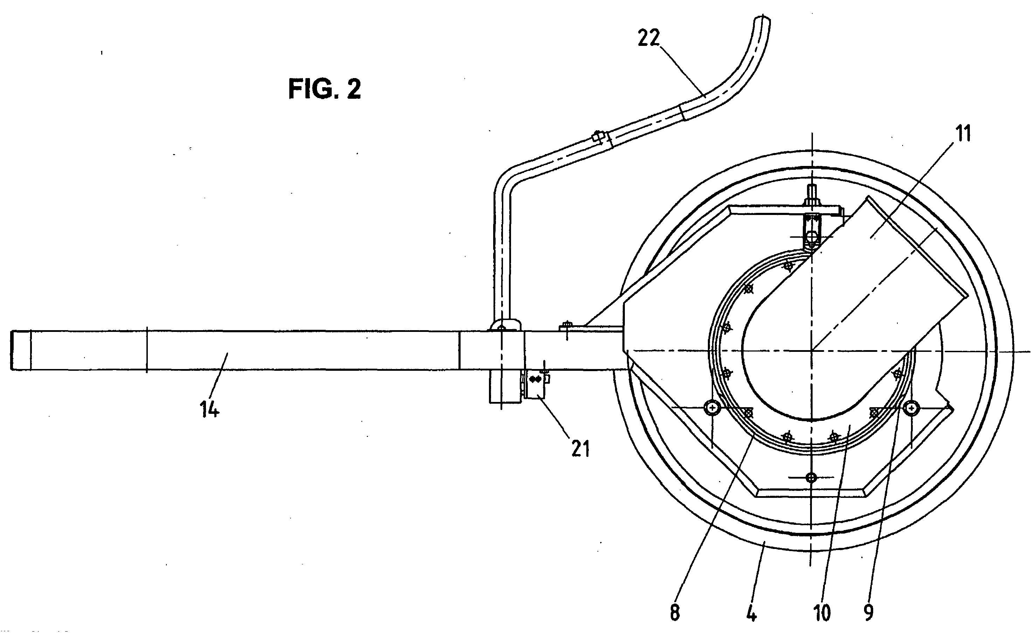

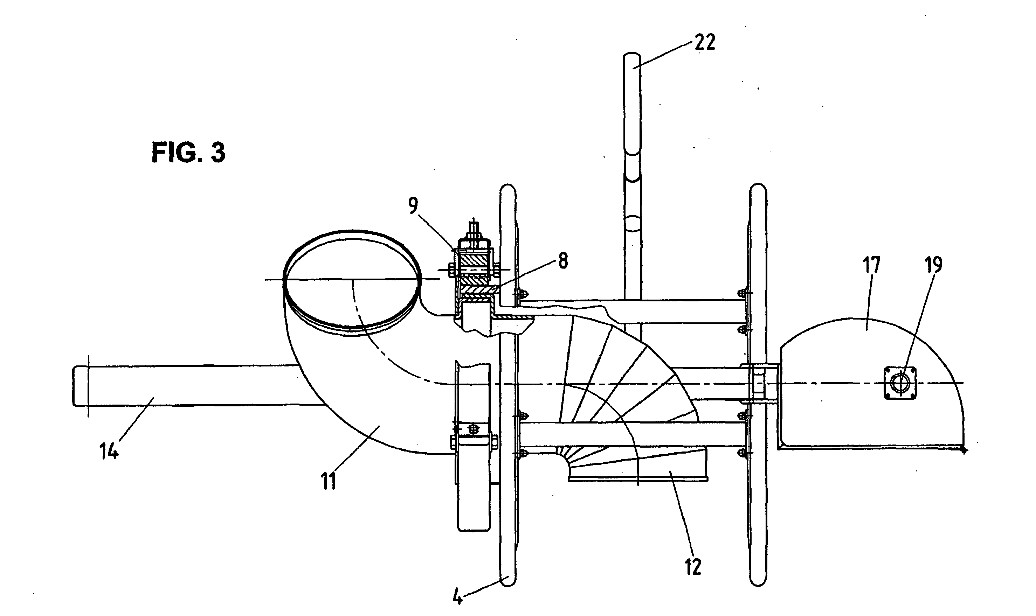

In den Figuren 1 bis 3 ist ein Ausführungsbeispiel der erfindungsgemässen Schlauchhaspel dargestellt, wobei Figur 1 die Schlauchhaspel 1 in ihrer Gebrauchslage von oben gesehen zeigt. Der Schlauch ist weggelassen, damit wesentliche Elemente der Schlauchhaspel besser sichtbar sind. Ein Haspelkörper 2 besteht im wesentlichen aus zwei Seitenscheiben 3 und 4 mit einem Durchmesser von etwa einem Meter, die durch eine Anzahl von Verbindungsstegen 5 miteinander verbunden sind. Die Länge der Verbindungsstege 5 ist geringfügig grösser als die Breite des (nicht dargestellten) Schlauches, wenn dieser in flachgedrücktem Zustand aufgewickelt wird, das heisst etwa 600 mm. Der Haspelkörper wird auf der Seite der Seitenscheibe 3 von einer Welle 6 getragen, die ihrerseits in einem Lager 7 ruht. Wie es am besten in den Figuren 2 und 3 sichtbar ist, wird der Haspelkörper 2 auf der Seite der Seitenscheibe 4 durch einen Tragring 8 getragen, der auf drei an seinem Umfang verteilten Rollen 9 drehbar gelagert ist. Konzentrisch zum Tragring 8 ist eine mit 10 bezeichnete Drehdichtung angeordnet, die der Durchführung der klimatisierten Luft von einer Quelle zum mit dem Haspelkörper verbundenen Schlauch dient. Die Drehdichtung 10 verbindet einen feststehenden Rohrbogen 11 mit einem drehbaren Rohrbogen 12, an dem das mit dem Haspelkörper rotierende Ende des Schlauches angeschlossen ist. Diese Drehdichtung mit einem Nenndurchmesser von 350 mm gewährleistet einen geringen Druckverlust.

Das Lager 7, die Rollen 9 und auch die nachfolgend noch zu beschreibende Antriebseinheit ruhen auf zwei Tragholmen 13 und 14, mit denen die gesamte Schlauchhaspel 1 sehr einfach am Fahrwerk einer Fluggastbrücke zu befestigen ist. Wie insbesondere die Figuren 2 und 3 zeigen, weist die Schlauchhaspel dank dieser Tragkonstruktion eine sehr geringe Bauhöhe auf.

Der Antrieb des Haspelkörpers erfolgt durch einen elektrischen Getriebemotor 15, der durch eine Magnetkupplung 16 mit der Welle 6 verbunden ist. Die Magnetkupplung 16 ist in stromlosem Zustand ausgekuppelt, so dass der Schlauch frei vom Haspelkörper 2 abrollbar ist, indem die Bedienungsperson einfach am Schlauch zieht. Die aus Getriebemotor 15 und Magnetkupplung 16 bestehende Antriebseinheit ist durch eine Haube 17 abgedeckt, die in Figur 3 dargestellt, aber in Figur 1 weggelassen ist. In einem Anschlusskasten 18 sind die für die elektrische Versorgung von Getriebemotor 15 und Magnetkupplung 16 erforderlichen Elemente wie Anschlussklemmen, Relais und Sicherungen untergebracht. Ein Bedienungselement in Form eines Tasters 19 ist an der Stirnseite der Haube 17 angeordnet. An einer Querstrebe 20 zwischen den Tragholmen 13 und 14 befindet sich eine Endschalter 21, von dem ein Betätigungsbügel 22 nach oben wegragt. Der Betätigungsbügel 22 ist so eingestellt, dass der Endschalter bei vollständig aufgewickeltem Schlauch durch den an seinem Ende vorgesehenen Kupplungsstutzen betätigt wird und dadurch die Stromzufuhr zum Getriebemotor 15 und zur Magnetkupplung 16 unterbrochen wird.

Die Bedienung der erfindungsgemässen Schlauchhaspel ist äusserst einfach und sicher. Da die Magnetkupplung in stromlosem Zustand ausgekuppelt ist, lässt sich der Schlauch bei Bedarf leicht vom Haspelkörper abziehen. Soll der Schlauch wieder aufgewickelt werden, genügt es, den Taster 19 zu betätigen. Durch das Betätigen des Tasters 19 werden der Getriebemotor 15 und die Magnetkupplung 16 gleichzeitig mit Strom versorgt, so dass der Haspelkörper 2 mit etwa 16 Umdrehungen pro Minute in Drehung versetzt und der Schlauch aufgewickelt wird. Dabei spielt es keine Rolle, ob der Schlauch ganz oder nur teilweise abgewickelt ist. Die den Taster betätigende Bedienungsperson steht dabei an der dem Flugzeug zugewandten Seite der Schlauchhaspel und kann den Aufwickelvorgang überwachen. Sobald die Bedienungsperson den Taster 19 loslässt, kommt der Getriebemotor zum Stillstand und die Drehverbindung zum Haspelkörper wird aufgehoben.

Die Schlauchhaspel, das heisst insbesondere der Haspelkörper 2, die Welle 6, der Tragring 8, die Drehdichtung 10, die beiden Rohrbögen 11 und 12, die Tragholme 13 und 14 mitsamt der Querstrebe 20, die Haube 17, der Anschlusskasten 18 und der Betätigungsbügel 22 sind vorzugsweise aus Edelstahl gefertigt, wodurch ein wartungsarmer Betrieb der Schlauchhaspel gewährleistet ist.

## Patentansprüche

1. Schlauchhaspel für Fluggastbrücken, mit einem Schlauch zum Zuführen von Luft zum Flugzeug, mit einem um eine horizontale Achse drehbaren Haspelkörper (2), der durch einen elektrischen Getriebemotor (15) antreibbar ist und auf dem der Schlauch bei Nichtgebrauch in flachgedrücktem Zustand in übereinander liegenden Lagen aufgewickelt ist, **gekennzeichnet durch** eine axial am Haspelkörper angeordnete Drehdichtung (10) zum Zuführen der Luft zum Schlauch, eine elektrisch betätigbare Magnetkupplung (16), die das Drehmoment des Getriebemotors (15) auf den Haspelkörper (2) überträgt und die in stromlosem Zustand gelöst ist, so dass der Haspelkörper frei drehbar ist und ein einziges Bedienungselement (19), mit dem die Magnetkupplung (16) einkuppelbar und gleichzeitig der Getriebemotor (15) in einer Drehrichtung einschaltbar ist, in welcher der Schlauch aufgewickelt wird.

2. Schlauchhaspel nach Anspruch 1, **gekennzeichnet durch** einen Endschalter (21), der die Stromzufuhr zum Getriebemotor (15) und zur Magnetkupplung (16) unterbricht, wenn der Schlauch ganz aufgewickelt ist.

3. Schlauchhaspel nach einem der vorangehenden Ansprüche, **dadurch gekennzeichnet, dass** der Haspelkörper (2), der Getriebemotor (15) und die Kupplung (16) auf Tragelementen (13,14) angeordnet sind, die dazu bestimmt sind, in horizontaler Ausrichtung am Fahrgestell einer Fluggastbrücke befestigt zu werden.

4. Schlauchhaspel nach Anspruch 3, **dadurch gekennzeichnet, dass** der Haspelkörper (2), die Drehdichtung (10) und die Tragelemente (13, 14) aus Edelstahl gefertigt sind.

## Claims

1. Hose reel for aircraft passenger boarding bridges, with a hose for supply of air to the aircraft, with a reel body (2) rotatable about a horizontal axis, which body is drivable by means of an electric geared motor (15) and on which, when not in use, the hose is wound up in flat-pressed state in layers lying on top of one another, **characterised by** a rotational sealing device (10) disposed axially on the reel body for supply of the air to the hose, an electrically operable magnetic coupling (16) which transmits the turning moment of the geared motor (15) to the reel body (2) and which is released in currentless state so that the reel body is freely rotatable, and a single operating element (19) with which the magnetic coupling (16) is able to be coupled and at the same time the geared motor (15) is able to be switched on in a rotational direction in which the hose is wound up.

2. Hose reel according to claim 1, **characterised by** a final limit switch (21) which interrupts the power supply to the geared motor (15) and to the magnetic coupling (16) when the hose is completely wound up.

3. Hose reel according to one of the preceding claims, **characterised in that** the reel body (2), the geared motor (15) and the coupling (16) are disposed on supporting members (13, 14) which are intended to be fixed in horizontal alignment on the undercarriage of a passenger boarding bridge.

4. Hose reel according to claim 3, **characterised in that** the reel body (2), the rotational sealing device (10) and the supporting members (13, 14) are made of stainless steel.

## Revendications

1. Dévidoir de tuyau pour passerelle d'embarquement d'avion, avec un tuyau pour l'amenée de l'air à l'avion, comprenant un corps de dévidoir (2) rotatif autour d'un axe horizontal, qui peut être entraîné par un moto-réducteur (15) et sur lequel le tuyau est enroulé, en cas de non-usage, en plusieurs couches superposées à l'état aplati, **caractérisé par** un joint rotatif (10) disposé axialement sur le corps de dévidoir pour l'amenée de l'air au tuyau, un coupleur magnétique (16) actionnable électriquement qui transmet le couple de rotation du moto-réducteur (15) au corps de dévidoir (2) et qui est détaché à l'état sans courant de sorte que le corps de dévidoir peut tourner librement, et **caractérisé par** un seul élément de commande (19) avec lequel le coupleur magnétique peut être accouplé et en même temps le moto-réducteur (15) peut être enclenché dans un sens de rotation dans lequel est enroulé le tuyau.

2. Dévidoir de tuyau selon la revendication 1, **caractérisé par** un interrupteur de fin de couse (21) qui coupe l'arrivée de courant au moto-réducteur (15) et à l'accouplement magnétique (16) quand le tuyau est enroulé complètement.

3. Dévidoir de tuyau selon l'une des revendications précédentes, **caractérisé en ce que** le corps de dévidoir (2), le moto-réducteur (15) et le coupleur (16) sont disposés sur des éléments supports (13, 14) qui sont destines à être fixés à l'horizontale sur le châssis d'une passerelle d'embarquement d'avion.

4. Dévidoir de tuyau selon la revendication 3, **caractérisé en ce que** le corps de dévidoir (2), le joint rotatif (10) et les éléments supports (13, 14) sont fabriqués en acier inoxydable.
